# EUROPEAN PATENT APPLICATION

(11) **EP 4 507 416 A2**
(43) Date of publication of application: **12.02.2025**
(21) Application number: 24192554.4
(22) Date of filing: 02.08.2024
(51) Int. Cl.: H04W 64/00, H04W 92/18

(54) **SIDELINK POSITIONING SESSION**

(30) Priority: 07.08.2023 GB 202312039
(71) Applicant: Nokia Technologies Oy, 02610 Espoo (FI)
(72) Inventor: SAHIN, Taylan, Munich (DE); MICHALOPOULOS, Diomidis, Munich (DE); KAKKAVAS, Anastasios, Munich (DE); KESHAVAMURTHY, Prajwal, Munich (DE); YILMAZ, Osman Nuri Can, Helsinki (FI); KUCERA, Stepan, Munich (DE); SÄILY, Mikko, Laukkoski (FI); SHIMIZU, Takayuki, Mountain View, CA (US); SUNELL, Kai-Erik, Naantali (FI); ARZELIER, Claude, Molieres-sur-Ceze (FR)
(74) Representative: Script Intellectual Property LLP

(57) **Abstract**

Embodiments of the present disclosure relate to sidelink positioning session establishment. In an aspect, a terminal device obtains session information associated with a first sidelink positioning session, and determines, based on the session information, difference information between the first sidelink positioning session and a second sidelink positioning session in which the terminal device is a target device. The terminal device transmits a positioning request for determining at least one anchor device to perform the second sidelink positioning session, wherein the positioning request comprises the difference information. The terminal device performs the second sidelink positioning session with the at least one anchor device. The embodiments of the present disclosure can immediately activate the target device in an efficient manner with reduced signaling overhead and latency.

## Description

### FIELD

Various example embodiments relate to the field of communications and in particular, to terminal devices, a managing device, methods, apparatuses and a computer readable storage medium related to a sidelink positioning session, especially related to establishment or updating of the sidelink positioning session.

### BACKGROUND

In the communications area, there is a constant evolution ongoing in order to provide efficient and reliable solutions for utilizing wireless communication networks. Each new generation has it owns technical challenges for handling the different situations and processes that are needed to connect and serve devices connected to the wireless network. To meet the demand for wireless data traffic having increased since deployment of 4th generation (4G) communication systems, efforts have been made to develop an improved 5th generation (5G) or pre-5G communication system. The new communication systems can support various types of service applications for terminal devices.

Some of the communication systems are related to sidelink (SL) positioning. Some sidelink (SL) positioning is based on the transmissions of SL positioning reference signal (SL-PRS) between the anchor and target UEs to enable localization of the target User Equipment (UE) within precise latency and accuracy requirements of the corresponding SL positioning session. With respect to resource allocation for SL PRS transmissions, Scheme 1 and Scheme 2 are introduced in the Rel-18, which are based on NR SL Mode 1 (network-controlled) and Mode 2 (UE autonomous) resource allocation. In Scheme 1, gNB (next generation Node B (5G base station)) can allocate resources for SL PRS in the form of dynamic grants or configured grants of type 1 or type 2, as in legacy SL communication. Whereas in Scheme 2, UEs autonomously select resources for SL PRS using sensing-based or random resource selection.

### SUMMARY

In general, example embodiments of the present disclosure provide a solution associated with a sidelink positioning session, particularly a solution for establishing or updating the sidelink positioning session.

In a first aspect, there is provided a terminal device. The terminal device comprises at least one processor and at least one memory including computer program codes. The at least one memory and the computer program codes are configured to, with the at least one processor, cause the terminal device to: obtain session information associated with a first sidelink positioning session; determine, based on the session information, difference information between the first sidelink positioning session and a second sidelink positioning session in which the terminal device is a target device; transmit a positioning request for determining at least one anchor device to perform the second sidelink positioning session, wherein the positioning request comprises the difference information; and perform the second sidelink positioning session with the at least one anchor device.

In a second aspect, there is provided a terminal device. The terminal device comprises at least one processor and at least one memory including computer program codes The at least one memory and the computer program codes are configured to, with the at least one processor, cause the terminal device to: obtain session information associated with a first sidelink positioning session; receive a request for determining the terminal device to perform a second sidelink positioning session in which a further terminal device is a target device, wherein the request comprises difference information between the first sidelink positioning session and the second sidelink positioning session; and based on the session information and the difference information, perform the second sidelink positioning session with the target device.

In a third aspect, there is provided a managing device. The managing device comprises at least one processor and at least one memory including computer program codes. The at least one memory and the computer program codes are configured to, with the at least one processor, cause the managing device to: provide, to a plurality of terminal devices, session information associated with a first sidelink positioning session; receive, from a terminal device among the plurality of terminal devices, a positioning request for a second sidelink positioning session in which the terminal device is a target device, wherein the positioning request comprises difference information between the first sidelink positioning session and the second sidelink positioning session; configure or activate a further terminal device among the plurality of terminal devices as an anchor device for the second sidelink positioning session.

In a fourth aspect, there is provided a method. The method comprises: obtaining, at a terminal device, session information associated with a first sidelink positioning session; determining, based on the session information, difference information between the first sidelink positioning session and a second sidelink positioning session in which the terminal device is a target device; transmitting a positioning request for determining at least one anchor device to perform the second sidelink positioning session, wherein the positioning request comprises the difference information; and performing the second sidelink positioning session with the at least one anchor device.

In a fifth aspect, there is provided a method. The method comprises: obtaining, at a terminal device, session information associated with a first sidelink positioning session; receiving a request for determining the terminal device to perform a second sidelink positioning session in which a further terminal device is a target device, wherein the request comprises difference information between the first sidelink positioning session and the second sidelink positioning session; and based on the session information and the difference information, performing the second sidelink positioning session with the target device.

In a sixth aspect, there is provided a method. The method comprises: providing, at a managing device and to a plurality of terminal devices, session information associated with a first sidelink positioning session; receiving, from a terminal device among the plurality of terminal devices, a positioning request for a second sidelink positioning session in which the terminal device is a target device, wherein the positioning request comprises difference information between the first sidelink positioning session and the second sidelink positioning session; configuring or activating a further terminal device among the plurality of terminal devices as an anchor device for the second sidelink positioning session.

In a seventh aspect, there is provided an apparatus comprising means for obtaining, at a terminal device, session information associated with a first sidelink positioning session; means for determining, based on the session information, difference information between the first sidelink positioning session and a second sidelink positioning session in which the terminal device is a target device; means for transmitting a positioning request for determining at least one anchor device to perform the second sidelink positioning session, wherein the positioning request comprises the difference information; and means for performing the second sidelink positioning session with the at least one anchor device.

In an eighth aspect, there is provided an apparatus comprising means for obtaining, at a terminal device, session information associated with a first sidelink positioning session; means for receiving a request for determining the terminal device to perform a second sidelink positioning session in which a further terminal device is a target device, wherein the request comprises difference information between the first sidelink positioning session and the second sidelink positioning session; and means for, based on the session information and the difference information, performing the second sidelink positioning session with the target device.

In a ninth aspect, there is provided an apparatus comprising means for providing, at a managing device and to a plurality of terminal devices, session information associated with a first sidelink positioning session; means for receiving, from a terminal device among the plurality of terminal devices, a positioning request for a second sidelink positioning session in which the terminal device is a target device, wherein the positioning request comprises difference information between the first sidelink positioning session and the second sidelink positioning session; means for configuring or activating a further terminal device among the plurality of terminal devices as an anchor device for the second sidelink positioning session.

In a tenth aspect, there is provided a non-transitory computer readable medium comprising program instructions for causing an apparatus to perform at least the method according to any one of the above fourth to sixth aspect.

In an eleventh aspect, there is provided a computer program comprising instructions, which, when executed by an apparatus, cause the apparatus at least to: obtain session information associated with a first sidelink positioning session; determine, based on the session information, difference information between the first sidelink positioning session and a second sidelink positioning session in which the terminal device is a target device; transmit a positioning request for determining at least one anchor device to perform the second sidelink positioning session, wherein the positioning request comprises the difference information; and perform the second sidelink positioning session with the at least one anchor device.

In a twelfth aspect, there is provided a computer program comprising instructions, which, when executed by an apparatus, cause the apparatus at least to: obtain session information associated with a first sidelink positioning session; receive a request for determining the terminal device to perform a second sidelink positioning session in which a further terminal device is a target device, wherein the request comprises difference information between the first sidelink positioning session and the second sidelink positioning session; and based on the session information and the difference information, perform the second sidelink positioning session with the target device.

In a thirteenth aspect, there is provided a computer program comprising instructions, which, when executed by an apparatus, cause the apparatus at least to: provide, to a plurality of terminal devices, session information associated with a first sidelink positioning session; receive, from a terminal device among the plurality of terminal devices, a positioning request for a second sidelink positioning session in which the terminal device is a target device, wherein the positioning request comprises difference information between the first sidelink positioning session and the second sidelink positioning session; configure or activate a further terminal device among the plurality of terminal devices as an anchor device for the second sidelink positioning session.

In a fourteenth aspect, there is provided a terminal device. The terminal device comprises obtaining circuitry configured to obtain session information associated with a first sidelink positioning session; determining circuitry configured to determine, based on the session information, difference information between the first sidelink positioning session and a second sidelink positioning session in which the terminal device is a target device; transmitting circuitry configured to transmit a positioning request for determining at least one anchor device to perform the second sidelink positioning session, wherein the positioning request comprises the difference information; and performing circuitry configured to perform the second sidelink positioning session with the at least one anchor device.

In a fifteenth aspect, there is provided a terminal device. The terminal device comprises obtaining circuitry configured to obtain session information associated with a first sidelink positioning session; receiving circuitry configured to receive a request for determining the terminal device to perform a second sidelink positioning session in which a further terminal device is a target device, wherein the request comprises difference information between the first sidelink positioning session and the second sidelink positioning session; and performing circuitry configured to, based on the session information and the difference information, perform the second sidelink positioning session with the target device.

In a sixteenth aspect, there is provided a managing device. The managing device comprises providing circuitry configured to provide, to a plurality of terminal devices, session information associated with a first sidelink positioning session; receiving circuitry configured to receive, from a terminal device among the plurality of terminal devices, a positioning request for a second sidelink positioning session in which the terminal device is a target device, wherein the positioning request comprises difference information between the first sidelink positioning session and the second sidelink positioning session; configuring or activating circuitry configured to configure or activate a further terminal device among the plurality of terminal devices as an anchor device for the second sidelink positioning session.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
Fig. 1A illustrates an example system in which embodiments of the present disclosure may be implemented;
Fig. 1B illustrates an example scenario related to SL positioning;
Fig. 2 illustrates a flowchart illustrating a process for sidelink positioning session establishment according to some embodiments of the present disclosure;
Fig. 3A and Fig. 3B are combined to illustrate a flowchart illustrating a method of sidelink positioning session establishment according to some embodiments of the present disclosure;
Fig. 4 illustrates a flowchart of a method implemented at a terminal device according to some embodiments of the present disclosure;
Fig. 5 illustrates a flowchart of a method implemented at a terminal device according to some other embodiments of the present disclosure;
Fig. 6 illustrates a flowchart of a method implemented at a managing device according to some embodiments of the present disclosure;
Fig. 7 illustrates a simplified block diagram of an apparatus that is suitable for implementing embodiments of the present disclosure; and
Fig. 8 illustrates a block diagram of an example computer readable medium in accordance with some embodiments of the present disclosure.

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In some embodiments of the present disclosure, a solution related to efficient sidelink positioning session establishment is proposed. Prior to describing the embodiments of the present disclosure, some related technologies will be described first.

SL positioning typically involves highly dynamic channel conditions between the UEs due to high mobility and variety of the scenarios, e.g., V2X (Vehicle-to-Everything Communications). Under such conditions, SL PRS transmissions need to be configured (e.g., selection of anchors, SL positioning method, setting the parameters of SL PRS such as bandwidth, selection of non-conflicting SL resources, etc.) in a way to satisfy the requested positioning QoS for a target UE. Typically, to position a target UE, multiple anchor UEs transmit SL PRS, and target UE conducts measurements using the received SL PRS, such as using time-based (e.g., Time Difference of Arrival (TDOA), Round Trip Time (RTT)), angle-based (e.g., Angle of Arrival (AOA)) or Carrier Phase based Positioning (CPP) techniques.

Depending on the availability of the anchors, SL PRS resources and optimization of SL PRS resources, configuring a SL PRS transmission becomes a challenging task under dynamic SL channel conditions and/or target UE moving in relation to anchor UEs. Typical positioning procedures relying on traditional request/response/reject/etc. messages between the UEs and/or other network entities would incur heavy costs in terms of latency and signaling for this task. Therefore, efficient mechanisms to establish and update SL positioning (sessions) are necessary. Such mechanisms are currently under discussion in 3GPP standards, however there is no solution adopted in the standards yet. This is the gap which the embodiments of the present disclosure intend to cover.

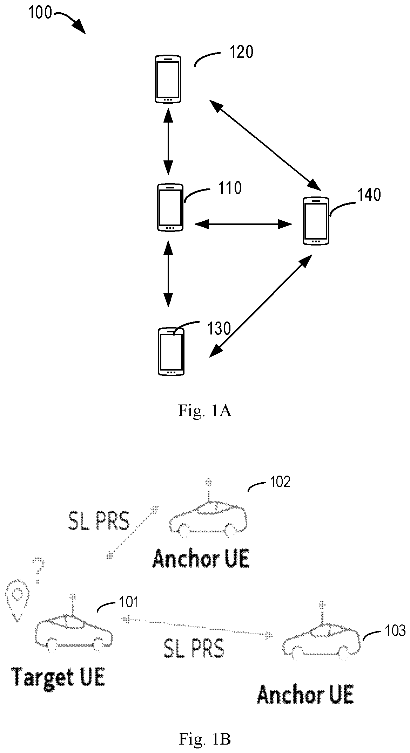

Principles and embodiments of the present disclosure will be described in detail below with reference to the accompanying drawings. Reference is first made to Fig. 1A, which illustrates an example system 100 in which embodiments of the present disclosure may be implemented. The system 100 includes a plurality of terminal devices, such as terminal devices 110, 120, 130, and 140. In some examples, one of the plurality of terminal devices may be as a target terminal device in a sidelink positioning session, and one or more terminal devices may be as anchor terminal device(s) in the sidelink positioning session for determining the location of the target terminal. As an example, in Fig. 1A, the terminal device 110 may be a target terminal device, and the terminal device 120 and 130 may be the anchor terminal devices. The terminal device 140 may be a server terminal device having a function of a managing entity. In some other examples, the system 100 may include a LMF (location management function) (not shown) instead of the terminal device 140, that is, the terminal device 140 may be replaced by other devices or functions having the function of the managing entity.

It is to be understood that the number of terminal devices is only for the purpose of illustration without suggesting any limitations. The system 100 may include any suitable number of devices or functions above.

Communications in the system 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Fig. 1B illustrates an example scenario related to SL positioning. As shown in Fig. 1B, in an SL positioning scenario, a target UE 101 is performing SL positioning session, i.e., exchanging SL-PRS with two anchor UEs 102, 103 in order to determine the location of the target UE.

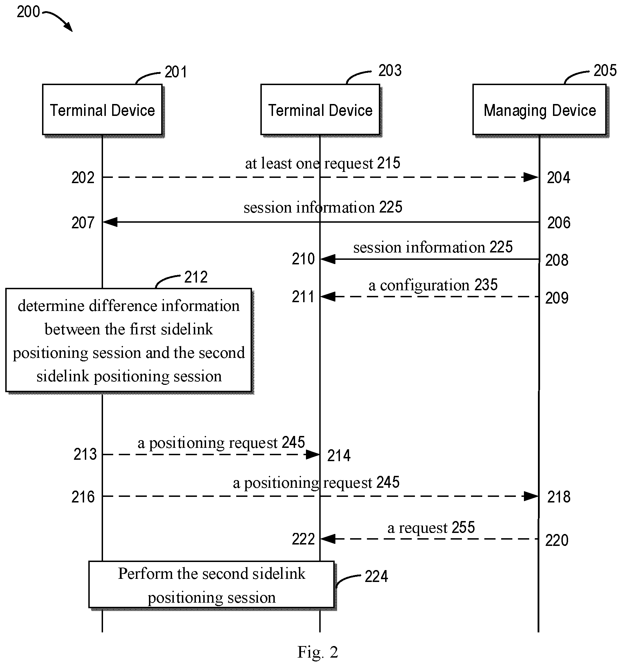

Reference is now made to Fig. 2, which shows a process 200 for sidelink positioning session establishment according to some embodiments of the present disclosure. In the process 200, a terminal device 201 (may be referred to as a first terminal device 201), a terminal device 203 (may be referred to as a second terminal device 203), and a managing device 205 are involved. In some examples, the first terminal device 201 is a target device in a sidelink positioning session to be established (may referred to as a second sidelink positioning session). The second terminal device 203 may be as an anchor device in the second sidelink positioning session. In some embodiments, the managing device 205 may be a location management function, or a server terminal device, or another core network entity or function, or a RAN (radio access network) node (e.g. a gNB). It should be noted that, in some embodiments, the devices involved in the process 200 are not limited to the devices which are shown in Fig. 2, and the number of the terminal device 201, the terminal device 203 or the managing device 205 is only shown as an example for the purpose of illustration without suggesting any limitations.

In the process 200, the first terminal device 201 may obtain session information 225 associated with a first sidelink positioning session. The first sidelink positioning session may comprise a previous sidelink positioning session, or an ongoing sidelink positioning session, or a predefined or preconfigured potential sidelink positioning session, or any combination thereof.

In some embodiments, in order to obtain the session information 225, the first terminal device 201 may transmit (202), to the managing device 205, at least one request 215 for the session information 225 associated with a previous sidelink positioning session, or an ongoing sidelink positioning session, or a predefined or preconfigured potential sidelink positioning session, or more than one sidelink positioning session above. In some examples, the at least one request 215 may be transmitted by the first terminal device 201 (the target device) itself, additionally or alternatively, the at least one request 215 may be transmitted via a server terminal device for the target device, additionally or alternatively, the at least one request 215 may be transmitted via a positioning information client associated with the target device.

On the managing device 205 side, the managing device 205 may receive (204) the at least one request 215 from the target device, or a server terminal device for the target device, or a positioning information client associated with the target device, or any combination thereof. The managing device 205 may determine the session information 225, and may provide to a plurality of terminal devices, the session information 225 associated with the first sidelink positioning session. As an example, as shown in Fig. 2, the managing device 205 may provide (206, 208) the session information 225 to the first terminal device 201 and the second terminal device 203 respectively. Accordingly, the first terminal device 201 and the second terminal device 203 may obtain (207, 210) the session information 225 associated with the first sidelink positioning session respectively.

Additionally or alternatively, in some embodiments, in order to obtain the session information 225, the first terminal device 201 may overhear (not shown in Fig. 2) the session information 225 of an ongoing positioning session. In some embodiments, the first terminal device 201 may overhear the session information 225 until relevant session information is received. For the relevant session information, its accuracy or quality of service (QoS) corresponds to a predetermined accuracy or a QoS or corresponds to an accuracy or a QoS higher than a threshold. For example, the first terminal device 201 as a target UE may perform overhearing until a relevant session information is received, until it has overheard or received session information 225 corresponding to a specific accuracy/QoS, or corresponding to an accuracy/QoS better than a threshold. Similarly, the second terminal device 203 may also overhear the session information 225 of an ongoing positioning session.

In some embodiments, the session information 225 may comprise an identity of the first sidelink positioning session, or at least one positioning method or positioning measurement utilized for the first sidelink positioning session, or at least one of a number or an identity of at least one anchor device for the first sidelink positioning session, or at least one configuration of SL PRS for the first sidelink positioning session, or at least one resource for SL PRS transmission or reception in the first sidelink positioning session, or a QoS associated with the first sidelink positioning session, or any combination thereof.

Based on the obtained session information 225, the first terminal device 201 may determine (212) difference information between the first sidelink positioning session and the second sidelink positioning session in which the first terminal device 201 is the target device. In some embodiments, the first terminal device 201 may determine the difference information based on a comparison of requirements of QoS (quality of service) associated with the first sidelink positioning session and the second sidelink positioning session, additionally or alternatively, the first terminal device 201 may determine the difference information based on one or more of the following conditions: a channel condition (e.g. a high-CBR channel); an environmental condition for positioning (e.g. a NLOS-dominated environment); a status (e.g. low power) of the target device; a status of a terminal device among at least one anchor device to perform the second sidelink positioning session, capability (e.g. low-capability UE) of the target device, or capability of a terminal device among the at least one anchor device.

Then the first terminal device 201 may transmit a positioning request 245 for determining at least one anchor device to perform the second sidelink positioning session. The positioning request 245 may comprise the difference information. In order to transmit the positioning request 245, in some embodiments, the first terminal device 201 may broadcast (not shown in Fig. 2) the positioning request 245. Additionally or alternatively, in some embodiments, the first terminal device 201 may transmit the positioning request 245 to at least one terminal device which is activated for the first sidelink positioning session. For example, in a case that the second terminal device 203 is a terminal device which is activated for the first sidelink positioning session, as shown in Fig. 2, the first terminal device 201 may transmit (213) the positioning request 245 to the second terminal device 203. Additionally or alternatively, in some embodiments, the first terminal device 201 may transmit (216) the positioning request 245 to the managing device 205.

For the embodiments in which the first terminal device 201 transmits the positioning request 245 to the managing device 205, the managing device 205 may activate a terminal device (e.g. the second terminal device 203) among the plurality of terminal devices as an anchor device for the second sidelink positioning session. Specifically, after receiving (218), from the first terminal device 201, the positioning request 245 for the second sidelink positioning session in which the first terminal device 201 is the target device, the managing device 205 may transmit (220) a request 255 for activating a terminal device (e.g. the second terminal device 203) as an anchor device for the second sidelink positioning session. The positioning request 245 may comprise the difference information between the first sidelink positioning session and the second sidelink positioning session. In some examples, for the managing device 205, the received positioning request 245 may be transmitted by the target device itself or a server terminal device for the target device or a positioning information client associated with the target device. In other words, the managing device 205 may receive the positioning request 245 from the target device, or a server terminal device for the target device, or a positioning information client associated with the target device, or any combination thereof.

On the second terminal device 203 side, the second terminal device 203 may receive a request for determining the second terminal device 203 to perform the second sidelink positioning session in which a further terminal device (i.e. the first terminal device 201) is a target device. The request may comprise the difference information between the first sidelink positioning session and the second sidelink positioning session. Continuing with reference to Fig. 2, in some embodiments, the request for determining the second terminal device 203 may be the request 255. As an example, the second terminal device 203 may receive (222), from the managing device 205, the request 255 for activating the second terminal device 203 as an anchor device for the second sidelink positioning session.

In some other embodiments, for example, for the embodiments in which the first terminal device 201 broadcasts the positioning request 245 or transmitting the positioning request 245 to the second terminal device 203, the request for determining the second terminal device 203 may be the positioning request 245. In some embodiments, the positioning request 245 received by the second terminal device 203 may be broadcasted or transmitted by the target device itself, or a server terminal device for the target device, or a positioning information client associated with the target device, or any combination thereof. As an example, the second terminal device 203 may receive (214) the positioning request 245 broadcasted or transmitted by the target device, or a server terminal device for the target device or a positioning information client associated with the target device, etc. The positioning request 245 may enable the second terminal device 203 to be autonomously activated as an anchor device for the second sidelink positioning session. In some examples, the server terminal device for the target device may be a terminal device serving the target device in a positioning session.

In some cases, the second terminal device 203 is configured, by the managing device 205, to be autonomously activated as an anchor device for the second sidelink positioning session. The managing device 205 may configure a terminal device (e.g. the second terminal device 203) among the plurality of terminal devices as an anchor device for the second sidelink positioning session. Specifically, the managing device 205 may transmit (209) a configuration 235 for configuring the second terminal device 203 to be autonomously activated as an anchor device for the second sidelink positioning session. On the second terminal device 203 side, the second terminal device 203 may receive (211) the configuration 235.

In some examples, if the following at least one condition is satisfied, the positioning request 245 is transmitted, and the at least one condition comprises a number of the at least one request is higher than a first threshold, or a number of overheard session information is higher than a second threshold, or a sum of a number of the at least one request and a number of overheard session information is higher than a third threshold, or any combination thereof. In some embodiments, the numbers above may be (pre-)configured by network or another device, e.g., a managing entity, or determined by first terminal device 201 itself, or pre-specified in the communication standard.

On the first terminal device 201 side, after transmitting the positioning request 245 for determining the at least one anchor device to perform the second sidelink positioning session, the first terminal device 201 may perform (224) the second sidelink positioning session with the at least one anchor device (e.g. the second terminal device 203). Specifically, in order to perform the second sidelink positioning session, the first terminal device 201 may select, based on the difference information, a configuration of a sidelink positioning reference signal (SL PRS) for the second sidelink positioning session and a resource associated with the SL PRS, and may transmit, based on the configuration of the SL PRS for the second sidelink positioning session and the resource associated with the SL PRS, the SL PRS to the at least one anchor device (e.g. the second terminal device 203). Accordingly, the at least one anchor device (e.g. the second terminal device 203) may receive the SL PRS.

In some example implementations, on the second terminal device 203 side, after receiving the request for determining the second terminal device 203 to perform the second sidelink positioning session in which a further terminal device (e.g. the first terminal device 201) is the target device, the second terminal device 203 may, based on the session information 225 and the difference information, perform (224) the second sidelink positioning session with the target device (i.e. the first terminal device 201). Specifically, in order to perform the second sidelink positioning session, the second terminal device 203 may select or update, based on the difference information, a configuration of a sidelink positioning reference signal (SL PRS) for the second sidelink positioning session and a resource associated with the SL PRS, and may transmit, based on the configuration of the SL PRS for the second sidelink positioning session and the resource associated with the SL PRS, the SL PRS to the target device, for example, the first terminal device 201. Accordingly, the target device, for example, the first terminal device 201 may receive the SL PRS.

Therefore, according to the embodiments of the present disclosure, a method is proposed to efficiently establish (or update) a SL positioning session, in terms of reduced signaling overhead and latency, by exploiting other (previously) active sessions or (pre-)configured session information. In some examples that the terminal device is a UE, for a (potential) target UE, the information regarding any previous, ongoing, and potential (e.g., pre-defined or pre-configured) SL positioning sessions is requested (e.g., by the target UE itself) from a positioning coordinating entity, e.g., LMF or a server UE, such as in terms of number (or IDs) of positioning anchors, utilized positioning method (e.g., DL-like SL TDOA, SL RTT, SL CPP etc.), SL PRS configurations (e.g., bandwidth, comb size, comb offset, sequence ID, etc.), and (e.g., reserved or configured) SL resources for transmitting/receiving SL PRS. Then, for the target UE that needs to be positioned, the positioning request indicates a difference (i.e., "delta", or referred to as difference information) in terms of positioning session information (e.g., positioning method, anchor(s), SL PRS configurations, etc.) with respect to that of a previous/ongoing/potential positioning session.

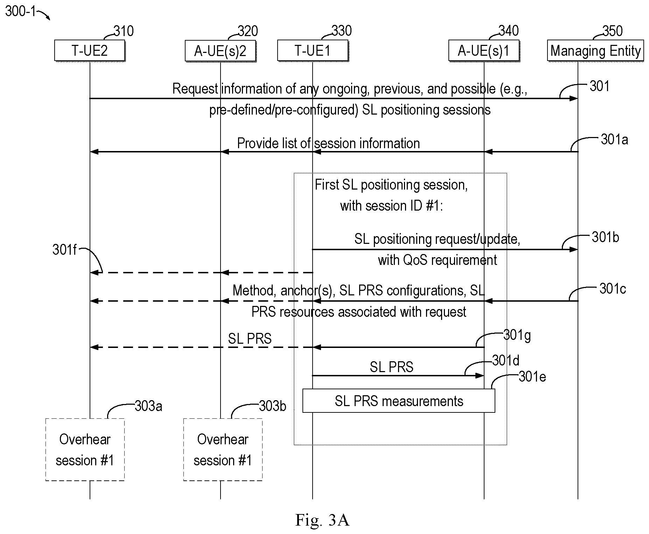

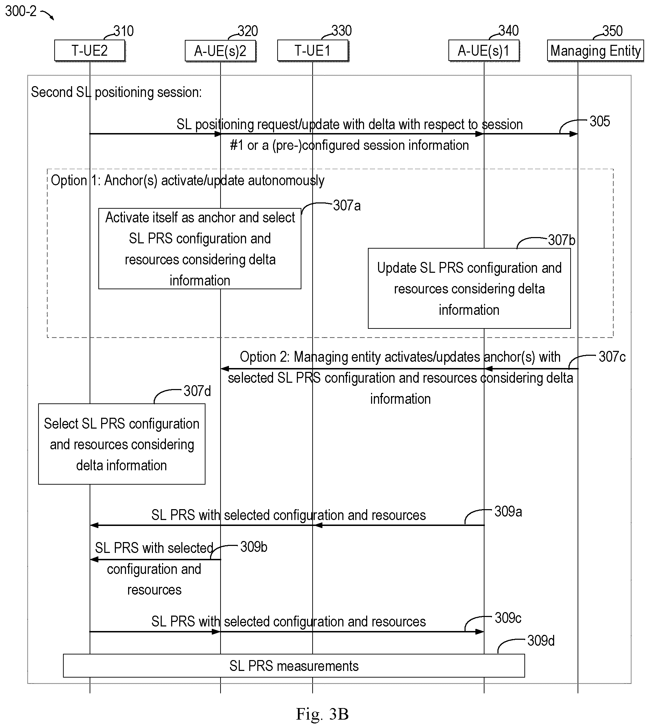

As a simple example, the request may indicate additional number of anchors and/or additional bandwidth as compared to an ongoing session (indicated with an ID (identity)). Based on this request, the anchor(s) for SL positioning, their SL PRS configuration(s), and SL resources to transmit/receive SL PRS are selected and activated - either autonomously by the anchors themselves or via the managing entity, e.g., LMF or a server UE. Consequently, the positioning session (which involves the anchors and their SL PRS configurations) for the target UE can be immediately activated in an efficient manner with reduced signaling overhead and latency. The details may further refer to Fig. 3A and Fig. 3B.

Fig. 3A and Fig. 3B are combined to illustrate a flowchart illustrating a method of sidelink positioning session establishment according to some embodiments of the present disclosure. As shown in Fig. 3A and Fig. 3B, the method comprises a process 300-1 and a process 300-2, and the process 300-2 is a continuation of the process 300-1. T-UE2 310, A-UE2 320, T-UE1 330, A-UE1 340 and a managing entity 350 are involved in the process of the method.

At 301, for a target UE or for a potential target UE (which may conduct SL positioning in the near future), "T-UE2 310" in Fig. 3A and Fig. 3B, a request is sent to a positioning coordinating entity (i.e. the managing entity 350) such as LMF (usually the coordinator in coverage) or a server UE (usually the coordinator out of coverage), in order to obtain information regarding to any previous, ongoing, and potential (e.g., pre-defined or pre-configured) SL positioning sessions. The information regarding to the previous, ongoing, and potential SL positioning sessions, i.e. session information associated with previous, ongoing, and potential SL positioning sessions. The T-UE2 310 will be as an example of a target UE below, and in some examples, it may be an example of the first terminal device 201. At 301a, the managing entity 350 may provide, to the target UE, a list of the SL positioning sessions above. In addition, the managing entity 350 may also provide the list of the SL positioning sessions to the other UEs, such as the A-UE2 320, the T-UE1 330, and the A-UE1 340.

In some examples, the request shown at 301 might be sent by the (potential) target UE itself (as in shown in Fig. 3A). In some other examples, the request may be sent by another UE, e.g., a (potential) server UE of the target UE. In some further examples, the request may be sent by a positioning information client, e.g., another UE. The positioning information client may be an application function associated with the target UE.

In some examples, the session information about a session may contain at least one or more of the following: a session / (pre-)configuration ID; utilized positioning method or positioning measurements; number of positioning anchors (and/or their IDs); utilized SL PRS configuration (i.e., signal characteristics/parameters); SL resources for SL PRS transmission and reception. For the session information above, specifically, the session / (pre-)configuration ID may be determined by coordinating entity or target UE of a session. The utilized positioning method may be, for example, DL-like SL TDOA, UL-like SL TDOA, single-sided/double-sided RTT, SL CPP, SL AoA, SL AoD, etc. The utilized positioning measurements may be, for example, RSTD measurement, ToA measurement, Rx-Tx time difference measurement, phase measurement, AoA measurement, AoD measurement, etc. The utilized SL PRS configuration may be, for example, SL PRS bandwidth, comb size, comb/RE offset, sequence ID, repetitions, periodicity (aperiodic, periodic, semi-persistent), comb-based/TDM-based multiplexing of SL-PRS from single UE and/or multiple UEs, etc. The SL resources for SL PRS transmission and reception may comprise time/frequency resources (e.g., slots, symbols, subchannels, and may be indicated with a resource ID), SL resource pool and/or bandwidth part and/or carrier; transmit power/directivity, and the resources might be reserved or (pre-)configured.

In addition, or alternatively, the (potential) target UE may also overhear session information of another positioning session nearby that is ongoing. For example, as shown in Fig. 3A, an ongoing positioning session may be an example of the first sidelink positioning session. At 303a, the T-UE2 310 may overhear the session information of the first SL positioning session. The overhearing behavior is shown in some dash arrows corresponding to 301f, 301c and 301g. In some examples, the other UEs may also overhear the information of the positioning session above, for example, at 303b, the A-UE2 320 may overhear the session information of the first SL positioning session. The UEs, such as the T-UE2 310 or the A-UE2 320 may overhear the session information by receiving broadcast message(s) of the corresponding UE(s) (e.g. the T-UE1 330) in that session containing information on positioning anchors, method, SL PRS configurations, etc. In some embodiments, the (potential) target UE may perform overhearing until a relevant session information is received, for example until it has overheard or received session information corresponding to a specific accuracy/QoS, or corresponding to an accuracy/QoS better than a threshold.

In the first SL positioning session, as shown at 301b, in some embodiments, the T-UE1 330 may transmit a SL positioning request (may be referred to as a first SL positioning request) with a QoS requirement to the managing entity 350. In some other embodiments, the T-UE1 330 may transmit a request with a QoS requirement, to perform updating for the first positioning session. Performing the updating, for example, performing the updating related to the SL PRS configuration and resources, etc. At 301c, the managing entity 350 may transmit corresponding position method, anchor(s), SL PRS configurations, SL PRS resources associated with the first SL positioning request to the UEs, such as the T-UE1 330, A-UE1 340, the T-UE2 310 and A-UE2 320. In the first positioning session, as shown at 301g (a solid arrow), 301d, and 301e, one of the T-UE1 330 and the A-UE1 340 may transmit to or receive from the other, the SL PRS to perform SL PRS measurements.

For the second SL positioning session, at 305, the target UE to be positioned may transmit a SL positioning request (may be referred to as a second SL positioning request), the second SL positioning request may indicate a difference, i.e., delta, with respect to one of the previous/ongoing/potential positioning sessions to establish (or update) a SL positioning session. In other words, the second SL positioning request may comprise difference information between a further sidelink positioning session and a second sidelink positioning session, and the further sidelink positioning session may be one of the previous/ongoing/potential positioning sessions, for example, the first SL positioning session.

In some embodiments, "delta" information (i.e. the difference information) can be determined by comparing the QoS requirement associated with other sessions and the QoS requirement of the target UE to be positioned. For example, with reference to Fig. 3B, the T-UE2 310 may determine the difference information based on a comparison of requirements of QoS associated with the first sidelink positioning session and the second sidelink positioning session. Additionally or alternatively, in some examples, the difference information may be determined according to channel/environmental/status/capability conditions related to the target UE (e.g., high-CBR channel, NLOS-dominated (non-line-of-sight-dominated) environment, low-power / low-capability target UE, etc.). For example, the T-UE2 310 may determine the difference information based on the following one or more conditions related to the T-UE2 310: the channel condition related to the T-UE2 310; the environmental condition related to the T-UE2 310; the status of the T-UE2 310; or the capability of the T-UE2 310. Additionally, in some examples, the target UE may determine the delta as follows: receive SL PRS from the existing indicated sessions, estimate the achieved QoS and finally determine the required delta so that the achieved QoS reaches the QoS requirement.

In some embodiments, the second SL positioning request indicating a difference could be provided only if a number of request(s) shown at 301 and/or number of overheard(s) shown at 303a is higher than a threshold. In some other embodiments, the sum of the two may also be considered in the general threshold in this step. For example, if the number of request transmitted by the T-UE2 310 at 301 is higher than a first threshold, or the number of overheard session information at 303a is higher than a second threshold, or the combination thereof, the T-UE2 310 will transmit the second SL positioning request comprising the difference information. Alternatively, for example, if a sum of the number of request transmitted by the T-UE2 310 at 301 and the number of overheard session information at 303a is higher than a third threshold, the T-UE2 310 will transmit the second SL positioning request comprising the difference information. This would allow to use this scheme only if it can be used by a certain number of UEs (e.g. that may overhear in turn).

Some examples of the difference information may be as below: "Requesting session #7 with 2 additional anchors", "Requesting session #6 with 2 less anchors", "Requesting session #3 but with double-sided RTT instead of single-sided RTT", "Requesting (pre-)configured session #4 with additional 10 MHz bandwidth", "Requesting (pre-)configured session #5 with 10 MHz narrower bandwidth", "Requesting (pre-)configured session #2 with comb size of 4", or "Requesting session #5 with anchors 1 and 4 transmitting 5 additional SL PRS repetitions".

The request message (i.e. the second SL positioning request) may be sent by the target UE itself. Alternatively, the request message may be sent by another UE, e.g., a (potential) server UE of the target UE. Alternatively, the request message may be sent by a positioning information client, e.g., another UE. In some examples, the request message could be broadcast (to enable nearby anchors to receive this request, e.g., "A-UEs 2" or already active anchors "A-UE1" serving the first positioning session), and/or sent to the coordinating entity (i.e. the managing entity 350) and/or already active anchors directly.

In case the second SL positioning request indicates a new positioning method which requires the anchors to transmit SL PRS (in addition to / instead of receiving SL PRS), e.g., by switching from UL-like SL TDOA to DL-like SL TDOA method, T-UE2 310 may reserve resources for the anchors for their transmission, and these could be indicated together with the request message.

For activation of the anchor(s) (i.e. anchor UE(s)), there may be two options. In option 1, an anchor may activate itself autonomously, and in option 2, an anchor may be activated by the managing entity 350. The details we be described respectively below.

In option 1, in some embodiments, as shown at 307a, any nearby UEs receiving the second SL positioning request may activate themselves as positioning anchors to transmit/receive SL PRS by selecting the corresponding SL positioning method/measurement, SL PRS configurations, and resources based on the indicated delta information. For example, the A-UE2 320 may receive the second SL positioning request, and activate itself as positioning anchors in the second SL positioning session. In some other embodiments, a nearby UE is an activated anchor. For example, as shown at 307b, the A-UE1 340 is an activated anchor, and it receives the second SL positioning request, then the A-UE1 340 may update the SL PRS configuration and resources considering delta information autonomously for the second SL positioning session.

Accordingly, the UEs are enabled to activate themselves or perform the update autonomously. For example, the A-UE2 320 and the A-UE1 340 may be configured by the managing entity 350 to activate/update autonomously. In some embodiments, in case multiple anchors (more than necessary or more than a threshold) receive the request, they may backoff upon sensing resources/transmissions reserved by other (first) anchors. This can be achieved by the anchor(s) receiving the SCI associated with SL PRS of the first anchor.

In option 2, as shown at 307c, the managing entity 350 receiving the second SL positioning request may request necessary anchors to transmit/receive SL PRS by selecting the corresponding SL positioning method/measurement, SL PRS configurations and/or resources based on the indicated delta information. In this request, the managing entity 350 may also indicate "delta" information (i.e. the difference information) with respect to a session to the anchor, e.g., request "activation with SL PRS configuration in session #3 with 10 MHz larger SL PRS bandwidth".

As shown at 307d, the target UE may also select SL PRS configuration to transmit SL PRS based on the positioning method/measurement it indicated, e.g., for methods such as RTT or UL-like TDOA that requires also the target UE to transmit SL PRS. Finally, as shown at 309a, 309b, 309c, and 309d, involved UEs transmit/receive SL PRS as per the selected method, configuration, and resources and perform positioning measurements to position the target UE.

It should be noted that, some embodiments of the present disclosure relate to 3GPP NR, however, the embodiments may also be applied for other radio access technologies, for example, LTE or 6G. While the examples in some embodiments relate to 3GPP, they may be used for non-3GPP technologies, for example IEEE and its 802.11 variants, wifi, wimax etc.

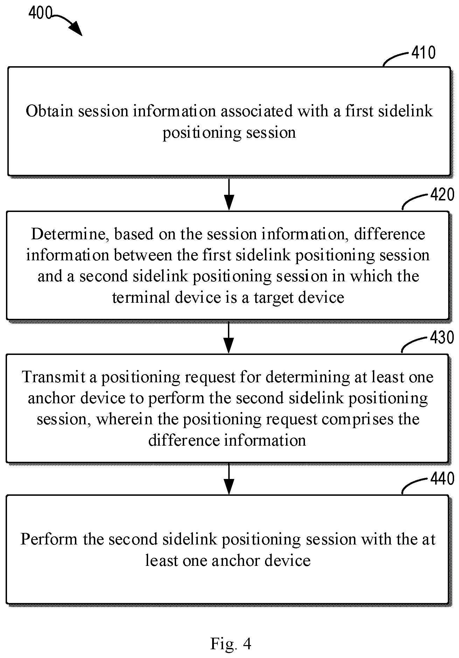

Fig. 4 illustrates a flowchart of a method 400 implemented at a terminal device according to some embodiments of the present disclosure. In some examples, the terminal device implementing the method 400 may be as the target device in the second sidelink positioning session, for example, the first terminal device 201 in Fig. 2, or the terminal device 110 in Fig. 1A.

As shown in Fig. 4, at block 410, the terminal device may obtain session information associated with a first sidelink positioning session. At block 420, the terminal device may determine, based on the session information, difference information between the first sidelink positioning session and a second sidelink positioning session in which the terminal device is a target device. At block 430, the terminal device may transmit a positioning request for determining at least one anchor device to perform the second sidelink positioning session, wherein the positioning request comprises the difference information. At block 440, the terminal device may perform the second sidelink positioning session with the at least one anchor device.

In some embodiments, in order to obtain the session information, the terminal device may transmit, to a managing device (e.g. the managing device 205 above), at least one request for the session information associated with at least one of a previous sidelink positioning session; an ongoing sidelink positioning session; or a predefined or preconfigured potential sidelink positioning session, or overhear the session information of an ongoing positioning session, or the combination thereof.

In some embodiments, the at least one request or the positioning request or both of them may be transmitted via the target device, or a server terminal device for the target device, or a positioning information client associated with the target device, or any combination thereof.

In some embodiments, the terminal device may overhear the session information until relevant session information is received, wherein an accuracy or a quality of service (QoS) of the relevant session information corresponds to a predetermined accuracy or a QoS or corresponds to an accuracy or a QoS higher than a threshold.

In some embodiments, in the event that at least one condition is satisfied, the positioning request is transmitted, wherein the at least one condition comprises: a number of the at least one request is higher than a first threshold, or a number of overheard session information is higher than a second threshold, or a sum of a number of the at least one request and a number of overheard session information is higher than a third threshold, or any combination thereof.

In some embodiments, the terminal device may determine the difference information based on a comparison of requirements of QoS associated with the first sidelink positioning session and the second sidelink positioning session, or based on one or more of the following conditions: a channel condition; an environmental condition for positioning; a status of the target device; a status of a terminal device among the at least one anchor device, capability of the target device, or capability of a terminal device among the at least one anchor device, or based on both the comparison and the one or more of the conditions.

In some embodiments, in order to transmit the positioning request, the terminal device may broadcast the positioning request, or transmit the positioning request to at least one terminal device which is activated for the first sidelink positioning session, or transmit the positioning request to a managing device, or any combination thereof.

In some embodiments, in order to perform the second sidelink positioning session, the terminal device may select, based on the difference information, a configuration of a sidelink positioning reference signal (SL PRS) for the second sidelink positioning session and a resource associated with the SL PRS, and may transmit, based on the configuration and the resource, the SL PRS to the at least one anchor device.

In some embodiments, the session information may comprise an identity of the first sidelink positioning session, or at least one positioning method or positioning measurement utilized for the first sidelink positioning session, or at least one of a number or an identity of at least one anchor device for the first sidelink positioning session, or at least one configuration of SL PRS for the first sidelink positioning session, or at least one resource for SL PRS transmission or reception in the first sidelink positioning session, or a QoS associated with the first sidelink positioning session, or any combination thereof.

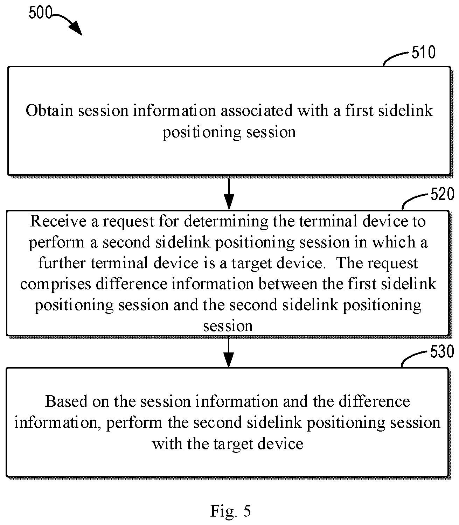

Fig. 5 illustrates a flowchart of a method 500 implemented at a terminal device according to some other embodiments of the present disclosure. In some examples, the terminal device implementing the method 500 may be as the anchor device in the second sidelink positioning session, for example, the second terminal device 203 in Fig 2, or the terminal device 120 or 130 in Fig. 1A.

As shown in Fig. 5, at block 510, the terminal device may obtain session information associated with a first sidelink positioning session. At block 520, the terminal device may receive a request for determining the terminal device to perform a second sidelink positioning session in which a further terminal device (e.g. the first terminal device 201 above) is a target device. The request may comprise difference information between the first sidelink positioning session and the second sidelink positioning session. At block 530, the terminal device may, based on the session information and the difference information, perform the second sidelink positioning session with the target device.

In some embodiments, in order to obtain the session information, the terminal device may receive, from a managing device (e.g. the managing device 205 above), the session information associated with at least one of a previous sidelink positioning session; an ongoing sidelink positioning session; or a predefined or preconfigured potential sidelink positioning session, or overhear the session information of an ongoing positioning session, or the combination thereof.

In some embodiments, in order to receive the request, the terminal device may receive a positioning request broadcasted or transmitted by one or more of the following: target device, a server terminal device for the target device or a positioning information client associated with the target device. The positioning request may enable the terminal device to be autonomously activated as an anchor device for the second sidelink positioning session. Additionally or alternatively, the terminal device may receive, from a managing device, a request for activating the terminal device as an anchor device for the second sidelink positioning session.

In some embodiments, the difference information is associated with a comparison of requirements of quality of service (QoS) associated with the first sidelink positioning session and the second sidelink positioning session, additionally or alternatively, the difference information is associated with one or more of the following conditions: a channel condition; an environmental condition for positioning; a status of the target device; a status of the terminal device; capability of the target device; or capability of the terminal device. In some embodiments, the difference information is determined based on the comparison, or the one or more of the conditions, or both of them.

In some embodiments, in order to perform the second sidelink positioning session, the terminal device may select or update, based on the difference information, a configuration of a sidelink positioning reference signal (SL PRS) for the second sidelink positioning session and a resource associated with the SL PRS, and may transmit, based on the configuration and the resource, the SL PRS to the target device.

In some embodiments, the session information may comprise one or more of the following: an identity of the first sidelink positioning session; at least one positioning method or positioning measurement utilized for the first sidelink positioning session; at least one of a number or an identity of at least one anchor device for the first sidelink positioning session; at least one configuration of SL PRS for the first sidelink positioning session; at least one resource for SL PRS transmission or reception in the first sidelink positioning session; or a QoS associated with the first sidelink positioning session.

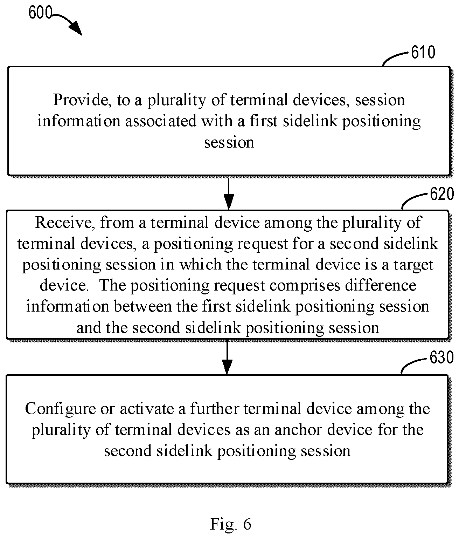

Fig. 6 illustrates a flowchart of a method 600 implemented at a managing device according to some embodiments of the present disclosure. In some examples, the managing device implementing the method 600 may be the managing device 205 in Fig 2 or the terminal device 140 in Fig. 1A.

As shown in Fig. 6, at block 610, the managing device may provide, to a plurality of terminal devices, session information associated with a first sidelink positioning session. At block 620, the managing device may receive, from a terminal device among the plurality of terminal devices, a positioning request for a second sidelink positioning session in which the terminal device is a target device. The positioning request may comprise difference information between the first sidelink positioning session and the second sidelink positioning session. At block 630, the managing device may configure or activate a further terminal device among the plurality of terminal devices as an anchor device for the second sidelink positioning session.

In some embodiments, the managing device may receive, from the target device, at least one request for the session information associated with one or more of the following sidelink positioning sessions: a previous sidelink positioning session, an ongoing sidelink positioning session, or a predefined or preconfigured potential sidelink positioning session, and the managing device may further determine the session information.

In some embodiments, the difference information is associated with a comparison of requirements of quality of service (QoS) associated with the first sidelink positioning session and the second sidelink positioning session, additionally or alternatively, one or more of the following conditions: a channel condition; an environmental condition for positioning; a status of the target device; a status of the anchor device; capability of the target device; or capability of the anchor device.

In some embodiments, the session information comprises an identity of the first sidelink positioning session, or at least one positioning method or positioning measurement utilized for the first sidelink positioning session, or at least one of a number or an identity of at least one anchor device for the first sidelink positioning session, or at least one configuration of SL PRS for the first sidelink positioning session, or at least one resource for SL PRS transmission or reception in the first sidelink positioning session, or a QoS associated with the first sidelink positioning session, or any combination thereof.

In some embodiments, in order to configure or activate the further terminal device, the managing device may configure the further terminal device to be autonomously activated as an anchor device for the second sidelink positioning session, additionally or alternatively, the managing device may transmit a request for activating the further terminal device as an anchor device for the second sidelink positioning session.

In some embodiments, the at least one request or the positioning request or both of them may be received from one of the following: the target device, or a server terminal device for the target device, or a positioning information client associated with the target device.

In some embodiments, the managing device may be a location management function or a server terminal device.

In some embodiments, an apparatus capable of performing any of the method 400 (for example, the terminal device 110 or the first terminal device 201) may comprise means for performing the respective steps of the method 400. The means may be implemented in any suitable form. For example, the means may be implemented in a circuitry or software module.

In some embodiments, the apparatus comprises means for obtaining session information associated with a first sidelink positioning session; means for determining, based on the session information, difference information between the first sidelink positioning session and a second sidelink positioning session in which the terminal device is a target device; means for transmitting a positioning request for determining at least one anchor device to perform the second sidelink positioning session, wherein the positioning request comprises the difference information; and means for performing the second sidelink positioning session with the at least one anchor device.

In some embodiments, the means for obtaining the session information comprises means for transmitting, to a managing device, at least one request for the session information associated with at least one of a previous sidelink positioning session; an ongoing sidelink positioning session; or a predefined or preconfigured potential sidelink positioning session; or means for overhearing the session information of an ongoing positioning session.

In some embodiments, means for transmitting transmits at least one of the at least one request or the positioning request via one of the following: the target device; a server terminal device for the target device; or a positioning information client associated with the target device.

In some embodiments, the means for overhearing the session information comprises means for overhearing the session information until relevant session information is received. An accuracy or a quality of service (QoS) of the relevant session information corresponds to a predetermined accuracy or a QoS or corresponds to an accuracy or a QoS higher than a threshold.

In some embodiments, the means for transmitting the positioning request comprises means for, in the event that at least one condition is satisfied, transmitting the positioning request. The at least one condition comprises at least one of the following: a number of the at least one request is higher than a first threshold; a number of overheard session information is higher than a second threshold; or a sum of a number of the at least one request and a number of overheard session information is higher than a third threshold.

In some embodiments, the means for determining the difference information comprises means for determining the difference information based on a comparison of requirements of QoS associated with the first sidelink positioning session and the second sidelink positioning session; or one or more of the following conditions: a channel condition; an environmental condition for positioning; a status of the target device; a status of a terminal device among the at least one anchor device, capability of the target device, or capability of a terminal device among the at least one anchor device, or any combination thereof.

In some embodiments, the means for transmitting the positioning request comprises means for broadcasting the positioning request, means for transmitting the positioning request to at least one terminal device which is activated for the first sidelink positioning session; or means for transmitting the positioning request to a managing device, or any combination thereof.

In some embodiments, the means for performing the second sidelink positioning session comprises means for selecting, based on the difference information, a configuration of a sidelink positioning reference signal (SL PRS) for the second sidelink positioning session and a resource associated with the SL PRS; and means for transmitting, based on the configuration and the resource, the SL PRS to the at least one anchor device.

In some embodiments, the session information comprises an identity of the first sidelink positioning session; or at least one positioning method or positioning measurement utilized for the first sidelink positioning session; or at least one of a number or an identity of at least one anchor device for the first sidelink positioning session; or at least one configuration of SL PRS for the first sidelink positioning session; or at least one resource for SL PRS transmission or reception in the first sidelink positioning session; or a QoS associated with the first sidelink positioning session; or any combination thereof.

In some embodiments, the apparatus further comprises means for performing other steps in some embodiments of the method 400. In some embodiments, the means comprises at least one processor; and at least one memory including computer program code, the at least one memory and computer program code configured to, with the at least one processor, cause the performance of the apparatus.

In some embodiments, an apparatus capable of performing any of the method 500 (for example, the terminal device 120 or 130, or the second terminal device 203) may comprise means for performing the respective steps of the method 500. The means may be implemented in any suitable form. For example, the means may be implemented in a circuitry or software module.

In some embodiments, the apparatus comprises: means for obtaining session information associated with a first sidelink positioning session; means for receiving a request for determining the terminal device to perform a second sidelink positioning session in which a further terminal device is a target device, wherein the request comprises difference information between the first sidelink positioning session and the second sidelink positioning session; and means for, based on the session information and the difference information, performing the second sidelink positioning session with the target device.

In some embodiments, the means for obtaining the session information comprises means for receiving, from a managing device, the session information associated with at least one of a previous sidelink positioning session; an ongoing sidelink positioning session; or a predefined or preconfigured potential sidelink positioning session; or means for overhearing the session information of an ongoing positioning session; or the combination thereof.

In some embodiments, the means for receiving the request comprises means for receiving a positioning request broadcasted or transmitted by at least one of the target device, a server terminal device for the target device or a positioning information client associated with the target device, wherein the positioning request enables the terminal device to be autonomously activated as an anchor device for the second sidelink positioning session; or means for receiving, from a managing device, a request for activating the terminal device as an anchor device for the second sidelink positioning session.

In some embodiments, the difference information is associated with a comparison of requirements of quality of service (QoS) associated with the first sidelink positioning session and the second sidelink positioning session, additionally or alternatively, one or more of the following conditions: a channel condition; an environmental condition for positioning; a status of the target device; a status of the terminal device; capability of the target device; or capability of the terminal device.

In some embodiments, the means for performing the second sidelink positioning session comprises means for selecting or updating, based on the difference information, a configuration of a sidelink positioning reference signal (SL PRS) for the second sidelink positioning session and a resource associated with the SL PRS; and means for transmitting, based on the configuration and the resource, the SL PRS to the target device.

In some embodiments, the session information comprising an identity of the first sidelink positioning session, or at least one positioning method or positioning measurement utilized for the first sidelink positioning session, or at least one of a number or an identity of at least one anchor device for the first sidelink positioning session, or at least one configuration of SL PRS for the first sidelink positioning session, or at least one resource for SL PRS transmission or reception in the first sidelink positioning session, or a QoS associated with the first sidelink positioning session, or any combination thereof.

In some embodiments, the apparatus further comprises means for performing other steps in some embodiments of the method 500. In some embodiments, the means comprises at least one processor; and at least one memory including computer program code, the at least one memory and computer program code configured to, with the at least one processor, cause the performance of the apparatus.

In some embodiments, an apparatus capable of performing any of the method 600 (for example, the managing device 205, or the terminal device 140) may comprise means for performing the respective steps of the method 600. The means may be implemented in any suitable form. For example, the means may be implemented in a circuitry or software module.

In some embodiments, the apparatus comprises: means for providing, to a plurality of terminal devices, session information associated with a first sidelink positioning session; means for receiving, from a terminal device among the plurality of terminal devices, a positioning request for a second sidelink positioning session in which the terminal device is a target device, wherein the positioning request comprises difference information between the first sidelink positioning session and the second sidelink positioning session; means for configuring or activating a further terminal device among the plurality of terminal devices as an anchor device for the second sidelink positioning session.

In some embodiments, the apparatus further comprises: means for receiving, from the target device, at least one request for the session information associated with at least one of a previous sidelink positioning session; an ongoing sidelink positioning session; or a predefined or preconfigured potential sidelink positioning session; and means for determining the session information.

In some embodiments, the difference information is associated with a comparison of requirements of quality of service (QoS) associated with the first sidelink positioning session and the second sidelink positioning session. Additionally or alternatively, the difference information is associated with one or more of the following conditions: a channel condition; an environmental condition for positioning; a status of the target device; a status of the anchor device; capability of the target device; or capability of the anchor device.

In some embodiments, the session information comprising an identity of the first sidelink positioning session, or at least one positioning method or positioning measurement utilized for the first sidelink positioning session, or at least one of a number or an identity of at least one anchor device for the first sidelink positioning session, or at least one configuration of SL PRS for the first sidelink positioning session, or at least one resource for SL PRS transmission or reception in the first sidelink positioning session, or a QoS associated with the first sidelink positioning session, or any combination thereof.

In some embodiments, the means for configuring or activating the further terminal device comprises means for configuring the further terminal device to be autonomously activated as an anchor device for the second sidelink positioning session; or means for transmitting a request for activating the further terminal device as an anchor device for the second sidelink positioning session.

In some embodiments, the at least one request or the positioning request or both of them are received from the target device, or a server terminal device for the target device, or a positioning information client associated with the target device.

In some embodiments, the managing device is a location management function or a server terminal device.

In some embodiments, the apparatus further comprises means for performing other steps in some embodiments of the method 600. In some embodiments, the means comprises at least one processor; and at least one memory including computer program code, the at least one memory and computer program code configured to, with the at least one processor, cause the performance of the apparatus.

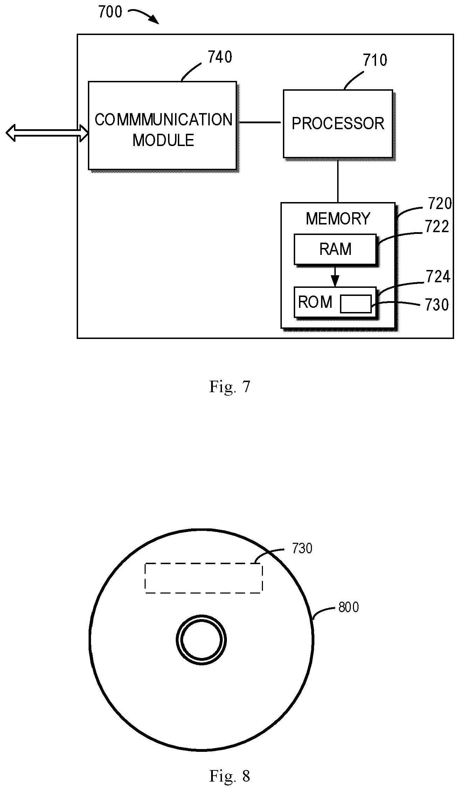

Fig. 7 is a simplified block diagram of a device 700 that is suitable for implementing embodiments of the present disclosure. The device 700 may be provided to implement the communication device, for example the terminal device 110 or 120 or 130 or 140 as shown in Fig. 1A. As shown, the device 700 includes one or more processors 710, one or more memories 720 coupled to the processor 710, and one or more communication modules 740 coupled to the processor 710.

The communication modules 740 is for bidirectional communications. The communication modules 740 has at least one antenna to facilitate communication. The communication interface may represent any interface that is necessary for communication with other network elements.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The program 730 may be stored in the ROM 724. The processor 710 may perform any suitable actions and processing by loading the program 730 into the RAM 722.

The embodiments of the present disclosure may be implemented by means of the program 730 so that the device 700 may perform any process of the disclosure as discussed with reference to Figs. 2 to 6. The embodiments of the present disclosure may also be implemented by hardware or by a combination of software and hardware.

In some embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. The computer readable medium may include any types of tangible non-volatile storage, such as ROM, EPROM, a flash memory, a hard disk, CD, DVD, and the like. Fig. 8 shows an example of the computer readable medium 800 in form of CD or DVD. The computer readable medium has the program 730 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 400 or 500 or 600 as described above with reference to Figs. 2-6. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

The present disclosure comprises the following clauses.

Clause 1. A terminal device comprising: at least one processor; and at least one memory storing instructions that, when executed by the at least one processor, cause the terminal device at least to: obtain session information associated with a first sidelink positioning session; determine, based on the session information, difference information between the first sidelink positioning session and a second sidelink positioning session in which the terminal device is a target device; transmit a positioning request for determining at least one anchor device to perform the second sidelink positioning session, wherein the positioning request comprises the difference information; and perform the second sidelink positioning session with the at least one anchor device.

Clause 2. The terminal device of clause 1, wherein the terminal device is caused to obtain the session information by at least one of the following: transmitting, to a managing device, at least one request for the session information associated with at least one of a previous sidelink positioning session; an ongoing sidelink positioning session; or a predefined or preconfigured potential sidelink positioning session; or overhearing the session information of an ongoing positioning session.

Clause 3. The terminal device of clause 2, wherein at least one of the at least one request or the positioning request is transmitted via one of the following: the target device; a server terminal device for the target device; or a positioning information client associated with the target device.

Clause 4. The terminal device of clause 2, wherein the terminal device is caused to overhear the session information until relevant session information is received, wherein an accuracy or a quality of service (QoS) of the relevant session information corresponds to a predetermined accuracy or a QoS or corresponds to an accuracy or a QoS higher than a threshold.

Clause 5. The terminal device of any of clauses 2-4, wherein: in the event that at least one condition is satisfied, the positioning request is transmitted, wherein the at least one condition comprises at least one of the following: a number of the at least one request is higher than a first threshold; a number of overheard session information is higher than a second threshold; or a sum of a number of the at least one request and a number of overheard session information is higher than a third threshold.

Clause 6. The terminal device of any of clauses 1-5, wherein the terminal device is caused to determine the difference information based on at least one of the following: a comparison of requirements of QoS associated with the first sidelink positioning session and the second sidelink positioning session; or one or more of the following conditions: a channel condition; an environmental condition for positioning; a status of the target device; a status of a terminal device among the at least one anchor device, capability of the target device, or capability of a terminal device among the at least one anchor device.

Clause 7. The terminal device of any of clauses 1-6, wherein the terminal device is caused to transmit the positioning request by at least one of the following: broadcasting the positioning request; transmitting the positioning request to at least one terminal device which is activated for the first sidelink positioning session; or transmitting the positioning request to a managing device.

Clause 8. The terminal device of any of clauses 1-7, wherein the terminal device is caused to perform the second sidelink positioning session by: selecting, based on the difference information, a configuration of a sidelink positioning reference signal (SL PRS) for the second sidelink positioning session and a resource associated with the SL PRS; and transmitting, based on the configuration and the resource, the SL PRS to the at least one anchor device.

Clause 9. The terminal device of any of clauses 1-8, wherein the session information comprises at least one of the following: an identity of the first sidelink positioning session; at least one positioning method or positioning measurement utilized for the first sidelink positioning session; at least one of a number or an identity of at least one anchor device for the first sidelink positioning session; at least one configuration of SL PRS for the first sidelink positioning session; at least one resource for SL PRS transmission or reception in the first sidelink positioning session; or a QoS associated with the first sidelink positioning session.

Clause 10. A terminal device comprising: at least one processor; and at least one memory storing instructions that, when executed by the at least one processor, cause the terminal device at least to: obtain session information associated with a first sidelink positioning session; receive a request for determining the terminal device to perform a second sidelink positioning session in which a further terminal device is a target device, wherein the request comprises difference information between the first sidelink positioning session and the second sidelink positioning session; and based on the session information and the difference information, perform the second sidelink positioning session with the target device.

Clause 11. The terminal device of clause 10, wherein the terminal device is caused to obtain the session information by at least one of the following: receiving, from a managing device, the session information associated with at least one of a previous sidelink positioning session; an ongoing sidelink positioning session; or a predefined or preconfigured potential sidelink positioning session; or overhearing the session information of an ongoing positioning session.

Clause 12. The terminal device of clause 10 or 11, wherein the terminal device is caused to receive the request by at least one of the following: receiving a positioning request broadcasted or transmitted by at least one of the target device, a server terminal device for the target device or a positioning information client associated with the target device, wherein the positioning request enables the terminal device to be autonomously activated as an anchor device for the second sidelink positioning session; or receiving, from a managing device, a request for activating the terminal device as an anchor device for the second sidelink positioning session.

Clause 13. The terminal device of any of clauses 10-12, wherein the difference information is associated with at least one of the following: a comparison of requirements of quality of service (QoS) associated with the first sidelink positioning session and the second sidelink positioning session; one or more of the following conditions: a channel condition; an environmental condition for positioning; a status of the target device; a status of the terminal device; capability of the target device; or capability of the terminal device.

Clause 14. The terminal device of any of clauses 10-13, wherein the terminal device is caused to perform the second sidelink positioning session by: selecting or updating, based on the difference information, a configuration of a sidelink positioning reference signal (SL PRS) for the second sidelink positioning session and a resource associated with the SL PRS; and transmitting, based on the configuration and the resource, the SL PRS to the target device.

Clause 15. The terminal device of any of clauses 10-14, wherein the session information comprising at least one of the following: an identity of the first sidelink positioning session; at least one positioning method or positioning measurement utilized for the first sidelink positioning session; at least one of a number or an identity of at least one anchor device for the first sidelink positioning session; at least one configuration of SL PRS for the first sidelink positioning session; at least one resource for SL PRS transmission or reception in the first sidelink positioning session; or a QoS associated with the first sidelink positioning session.

Clause 16. A managing device, comprising: at least one processor; and at least one memory storing instructions that, when executed by the at least one processor, cause the managing device at least to: provide, to a plurality of terminal devices, session information associated with a first sidelink positioning session; receive, from a terminal device among the plurality of terminal devices, a positioning request for a second sidelink positioning session in which the terminal device is a target device, wherein the positioning request comprises difference information between the first sidelink positioning session and the second sidelink positioning session; configure or activate a further terminal device among the plurality of terminal devices as an anchor device for the second sidelink positioning session.

Clause 17. The managing device of clause 16, wherein the managing device is further caused to: receive, from the target device, at least one request for the session information associated with at least one of a previous sidelink positioning session; an ongoing sidelink positioning session; or a predefined or preconfigured potential sidelink positioning session; and determine the session information.

Clause 18. The managing device of clause 16 or 17, wherein the difference information is associated with at least one of the following: a comparison of requirements of quality of service (QoS) associated with the first sidelink positioning session and the second sidelink positioning session; one or more of the following conditions: a channel condition; an environmental condition for positioning; a status of the target device; a status of the anchor device; capability of the target device; or capability of the anchor device.

Clause 19. The managing device of any of clauses 16-18, wherein the session information comprising at least one of the following: an identity of the first sidelink positioning session; at least one positioning method or positioning measurement utilized for the first sidelink positioning session; at least one of a number or an identity of at least one anchor device for the first sidelink positioning session; at least one configuration of SL PRS for the first sidelink positioning session; at least one resource for SL PRS transmission or reception in the first sidelink positioning session; or a QoS associated with the first sidelink positioning session.

Clause 20. The managing device of any of clauses 16-19, wherein the managing device is caused to configure or activate the further terminal device by one of the following: configuring the further terminal device to be autonomously activated as an anchor device for the second sidelink positioning session; or transmitting a request for activating the further terminal device as an anchor device for the second sidelink positioning session.

Clause 21. The managing device of any of clauses 17-20, wherein at least one of the at least one request or the positioning request is received from one of the following: the target device; a server terminal device for the target device; or a positioning information client associated with the target device.

Clause 22. The managing device of any of clauses 16-20, wherein the managing device is one of a location management function or a server terminal device.

Clause 23. A method comprising: obtaining, at a terminal device, session information associated with a first sidelink positioning session; determining, based on the session information, difference information between the first sidelink positioning session and a second sidelink positioning session in which the terminal device is a target device; transmitting a positioning request for determining at least one anchor device to perform the second sidelink positioning session, wherein the positioning request comprises the difference information; and performing the second sidelink positioning session with the at least one anchor device.

Clause 24. A method comprising: obtaining, at a terminal device, session information associated with a first sidelink positioning session; receiving a request for determining the terminal device to perform a second sidelink positioning session in which a further terminal device is a target device, wherein the request comprises difference information between the first sidelink positioning session and the second sidelink positioning session; and based on the session information and the difference information, performing the second sidelink positioning session with the target device.

Clause 25. A method comprising: providing, at a managing device and to a plurality of terminal devices, session information associated with a first sidelink positioning session; receiving, from a terminal device among the plurality of terminal devices, a positioning request for a second sidelink positioning session in which the terminal device is a target device, wherein the positioning request comprises difference information between the first sidelink positioning session and the second sidelink positioning session; and configuring or activating a further terminal device among the plurality of terminal devices as an anchor device for the second sidelink positioning session.

Clause 26. An apparatus comprising: means for obtaining, at a terminal device, session information associated with a first sidelink positioning session; means for determining, based on the session information, difference information between the first sidelink positioning session and a second sidelink positioning session in which the terminal device is a target device; means for transmitting a positioning request for determining at least one anchor device to perform the second sidelink positioning session, wherein the positioning request comprises the difference information; and means for performing the second sidelink positioning session with the at least one anchor device.

Clause 27. An apparatus comprising: means for obtaining, at a terminal device, session information associated with a first sidelink positioning session; means for receiving a request for determining the terminal device to perform a second sidelink positioning session in which a further terminal device is a target device, wherein the request comprises difference information between the first sidelink positioning session and the second sidelink positioning session; and means for, based on the session information and the difference information, performing the second sidelink positioning session with the target device.

Clause 28. An apparatus comprising: means for providing, at a managing device and to a plurality of terminal devices, session information associated with a first sidelink positioning session; means for receiving, from a terminal device among the plurality of terminal devices, a positioning request for a second sidelink positioning session in which the terminal device is a target device, wherein the positioning request comprises difference information between the first sidelink positioning session and the second sidelink positioning session; and means for configuring or activating a further terminal device among the plurality of terminal devices as an anchor device for the second sidelink positioning session.

Clause 29. A non-transitory computer readable medium comprising program instructions that, when executed by an apparatus, cause the apparatus to perform at least the method of any of clauses 23-25.

## Claims

1. A terminal device comprising:
at least one processor; and
at least one memory storing instructions that, when executed by the at least one processor, cause the terminal device at least to:
obtain session information associated with a first sidelink positioning session;
determine, based on the session information, difference information between the first sidelink positioning session and a second sidelink positioning session in which the terminal device is a target device;
transmit a positioning request for determining at least one anchor device to perform the second sidelink positioning session, wherein the positioning request comprises the difference information; and
perform the second sidelink positioning session with the at least one anchor device.

2. The terminal device of claim 1, wherein the terminal device is caused to obtain the session information by at least one of the following:
transmitting, to a managing device, at least one request for the session information associated with at least one of a previous sidelink positioning session; an ongoing sidelink positioning session; or a predefined or preconfigured potential sidelink positioning session; or
overhearing the session information of an ongoing positioning session.

3. The terminal device of claim 2, wherein at least one of the at least one request or the positioning request is transmitted via one of the following:
the target device;
a server terminal device for the target device; or
a positioning information client associated with the target device.

4. The terminal device of claim 2, wherein the terminal device is caused to overhear the session information until relevant session information is received, wherein an accuracy or a quality of service (QoS) of the relevant session information corresponds to a predetermined accuracy or a QoS or corresponds to an accuracy or a QoS higher than a threshold.

5. The terminal device of any of claims 2-4, wherein:
in the event that at least one condition is satisfied, the positioning request is transmitted, wherein the at least one condition comprises at least one of the following:
a number of the at least one request is higher than a first threshold;
a number of overheard session information is higher than a second threshold; or
a sum of a number of the at least one request and a number of overheard session information is higher than a third threshold.

6. The terminal device of any of claims 1-5, wherein the terminal device is caused to determine the difference information based on at least one of the following:
a comparison of requirements of QoS associated with the first sidelink positioning session and the second sidelink positioning session; or
one or more of the following conditions: a channel condition; an environmental condition for positioning; a status of the target device; a status of a terminal device among the at least one anchor device, capability of the target device, or capability of a terminal device among the at least one anchor device.

7. The terminal device of any of claims 1-6, wherein the terminal device is caused to transmit the positioning request by at least one of the following:
broadcasting the positioning request;
transmitting the positioning request to at least one terminal device which is activated for the first sidelink positioning session; or
transmitting the positioning request to a managing device.

8. The terminal device of any of claims 1-7, wherein the terminal device is caused to perform the second sidelink positioning session by:
selecting, based on the difference information, a configuration of a sidelink positioning reference signal (SL PRS) for the second sidelink positioning session and a resource associated with the SL PRS; and
transmitting, based on the configuration and the resource, the SL PRS to the at least one anchor device.

9. The terminal device of any of claims 1-8, wherein the session information comprises at least one of the following:
an identity of the first sidelink positioning session;
at least one positioning method or positioning measurement utilized for the first sidelink positioning session;
at least one of a number or an identity of at least one anchor device for the first sidelink positioning session;
at least one configuration of SL PRS for the first sidelink positioning session;
at least one resource for SL PRS transmission or reception in the first sidelink positioning session; or
a QoS associated with the first sidelink positioning session.

10. A managing device, comprising:
at least one processor; and
at least one memory storing instructions that, when executed by the at least one processor, cause the managing device at least to:
provide, to a plurality of terminal devices, session information associated with a first sidelink positioning session;
receive, from a terminal device among the plurality of terminal devices, a positioning request for a second sidelink positioning session in which the terminal device is a target device, wherein the positioning request comprises difference information between the first sidelink positioning session and the second sidelink positioning session;
configure or activate a further terminal device among the plurality of terminal devices as an anchor device for the second sidelink positioning session.

11. The managing device of claim 10, wherein the managing device is further caused to:
receive, from the target device, at least one request for the session information associated with at least one of a previous sidelink positioning session; an ongoing sidelink positioning session; or a predefined or preconfigured potential sidelink positioning session; and
determine the session information.

12. The managing device of any of claims 10-11, wherein the managing device is caused to configure or activate the further terminal device by one of the following:
configuring the further terminal device to be autonomously activated as an anchor device for the second sidelink positioning session; or
transmitting a request for activating the further terminal device as an anchor device for the second sidelink positioning session.

13. A method comprising:
obtaining, at a terminal device, session information associated with a first sidelink positioning session;
determining, based on the session information, difference information between the first sidelink positioning session and a second sidelink positioning session in which the terminal device is a target device;
transmitting a positioning request for determining at least one anchor device to perform the second sidelink positioning session, wherein the positioning request comprises the difference information; and
performing the second sidelink positioning session with the at least one anchor device.

14. A method comprising:
providing, at a managing device and to a plurality of terminal devices, session information associated with a first sidelink positioning session;
receiving, from a terminal device among the plurality of terminal devices, a positioning request for a second sidelink positioning session in which the terminal device is a target device, wherein the positioning request comprises difference information between the first sidelink positioning session and the second sidelink positioning session; and
configuring or activating a further terminal device among the plurality of terminal devices as an anchor device for the second sidelink positioning session.

15. A non-transitory computer readable medium comprising program instructions that, when executed by an apparatus, cause the apparatus to perform at least the method of any of claims 13-14.
